# EUROPEAN PATENT APPLICATION

(11) **EP 3 982 650 A1**
(43) Date of publication of application: **13.04.2022**
(21) Application number: 21177376.7
(22) Date of filing: 02.06.2021
(51) Int. Cl.: H04W 4/40, H04W 4/44, H04W 4/46, H04W 4/80

(54) **VEHICLE AND VEHICLE COMMUNICATION SYSTEM**

(30) Priority: 12.10.2020 WO PCT/JP2020/038526
(71) Applicant: Yamaha Hatsudoki Kabushiki Kaisha, Iwata-shi, Shizuoka 438-8501 (JP)
(72) Inventor: SUGIYAMA, Yuichi, Iwata-shi, Shizuoka, 4388501 (JP)
(74) Representative: Grünecker Patent- und Rechtsanwälte PartG mbB

(57) **Abstract**

A straddled vehicle (1) includes: a short-range communication module (21) configured to communicably connect the vehicle (1) to another vehicle; and an LPWA communication module (22) configured to communicably connect the vehicle (1) to a server (2) on a communication network (7) through an LPWA base station (6). When the vehicle (1) is present inside a communication area (S) of the base station (6), the vehicle (1) transmits vehicle information relevant to the vehicle (1) and identification information of the vehicle (1) to the server (2) through the base station (6). When the vehicle (1) is present outside the communication area (S) of the base station (6) and the vehicle (1) can communicate with the other vehicle, the vehicle (1) transmits the vehicle information and the identification information to the other vehicle. When the other vehicle (1) is present inside the communication area (S), the other vehicle transmits the vehicle information and the identification information to the server (2) through the base station (6). When the other vehicle is present outside the communication area (S) and the other vehicle can communicate with a further vehicle, the other vehicle transmits the vehicle information and the identification information to the further vehicle.

## Description

The present invention relates to a vehicle, a vehicle communication system and a method for communication of a plurality of vehicles.

JP-A-2010-120628 discloses a system in which a motorcycle transmits/receives information to/from a management server on a communication network through a mobile communication system (such as a fourth-generation mobile communication system) using an SIM (Subscriber Identity Module). In particular, in the disclosure of JP-A-2010-120628, position information of the motorcycle is transmitted to the management server through the mobile communication system.

The mobile communication system using the SIM requires high communication cost. Therefore, maintenance cost for maintaining the motorcycle is so high as to impose a great economic burden on an owner who owns the motorcycle. Furthermore, when the motorcycle moves across the border between two countries (for example, when the motorcycle moves from France to Germany), the communication cost of the mobile communication system using the SIM in the destination country rises exponentially. Thus, in terms of the communication cost, there is a problem in the mobile communication system using the SIM. Further, the mobile communication system using the SIM requires high power consumption. For this reason, in a state in which a drive source such as an engine is not driven, the mobile communication system using the SIM consumes electric power stored in a battery at a high pace, and a communication time between the motorcycle and the server is restricted. Thus, from the aforementioned viewpoints, there is still room for examination about the motorcycle that can communicate with the server on the communication network while reducing the communication cost of the motorcycle and the power consumption caused by the communication between the motorcycle and the server.

An object of the present invention is to provide a vehicle that can communicate with a server on a communication network while reducing communication cost and power consumption caused by the communication. Moreover, another object of the present disclosure is to provide a vehicle communication system and/or method for communication of a plurality of vehicles in which the vehicle can communicate with the server on the communication network while reducing the communication cost and the power consumption caused by the communication, and that can provide rich user experience for an owner of the vehicle. According to the present invention said object is solved by vehicle having the features of independent claim 1. Moreover, according to the present invention said object is solved by a vehicle communication system having the features of independent claim 7. Furthermore, according to the present invention said object is solved by a method for communication of a plurality of vehicles having the features of independent claim 14. Preferred embodiments are laid down in the dependent claims.

According to one or more aspects of the present disclosure, there is provided a straddled vehicle comprising: a short-range communication module configured to communicably connect the vehicle to another vehicle; and an LPWA communication module configured to communicably connect the vehicle to a server on a communication network through an LPWA base station. When the vehicle is present inside a communication area of the base station, the vehicle transmits vehicle information relevant to the vehicle and identification information of the vehicle to the server through the base station. When the vehicle is present outside the communication area of the base station and the vehicle can communicate with the other vehicle, the vehicle transmits the vehicle information and the identification information to the other vehicle. When the other vehicle is present inside the communication area, the other vehicle transmits the vehicle information and the identification information to the server through the base station. When the other vehicle is present outside the communication area and the other vehicle can communicate with a further vehicle, the other vehicle transmits the vehicle information and the identification information to the further vehicle.

According to the aforementioned configuration, the vehicle information is transmitted from the vehicle to the server on the communication network not through a mobile communication system (such as a fourth-generation or fifth-generation mobile communication system) that uses an SIM and that requires high communication cost and high power consumption caused by the communication but through LPWA (Low Power Wide Area) communication that requires low communication cost and low power consumption. Further, even when the vehicle is not present inside the communication area of the LPWA base station, the vehicle information is transmitted to the server through the other vehicle or the further vehicle present inside the communication area of the LPWA base station. Thus, it is possible to provide the vehicle that can communicate with the server on the communication network while reducing the communication cost and the power consumption.

The vehicle information may include maintenance information of the vehicle.

According to the aforementioned configuration, the maintenance information of the vehicle can be transmitted to the server on the communication network while the communication cost and the power consumption are reduced.

The vehicle information may include abnormality information indicating abnormality of the vehicle.

According to the aforementioned configuration, the abnormality information of the vehicle can be transmitted to the server on the communication network while the communication cost and the power consumption are reduced.

In response to detecting the abnormality of the vehicle, the vehicle determines to transmit the abnormality information and the identification information to the server.

According to the aforementioned configuration, when the abnormality of the vehicle is detected, the abnormality information of the vehicle can be immediately transmitted to the server on the communication network.

The vehicle information may include position information of the vehicle.

According to the aforementioned configuration, the positional information of the vehicle can be transmitted to the server on the communication network while the communication cost and the power consumption are reduced.

The vehicle information may include the position information of the vehicle and abnormality information indicating abnormality of the vehicle. In response to detecting the abnormality of the vehicle, the vehicle may determine to transmit the abnormality information, the position information and the identification information to the server.

According to the aforementioned configuration, when the abnormality of the vehicle is detected, the abnormality information of the vehicle and the position information of the vehicle can be immediately transmitted to the server on the communication network.

The other vehicle and the further vehicle may be straddled vehicles.

According to the aforementioned configuration, even when the vehicle is not present inside the communication area of the LPWA base station, the vehicle can transmit the vehicle information to the server through the other vehicle or the further vehicle that is a saddle-riding type and that is present inside the communication area of the LPWA base station.

The short-range communication module may be a short-range communication module based on a Wi-SUN communication standard.

According to the aforementioned configuration, the short-range communication module is the short-range communication module based on the Wi-SUN communication standard. Accordingly, it is possible to construct a mesh network by the short-range communication among the vehicles. Thus, even when the vehicle is not present inside the communication area of the LPWA base station, the vehicle can transmit the vehicle information to the server through the mesh network based on the Wi-SUN communication standard and the LPWA communication. That is, it is possible to supplement the communication area of the LPWA by the Wi-SUN mesh network among the vehicles.

The server may identify a mobile terminal associated with the vehicle based on the received identification information of the vehicle, and transmit the vehicle information to the identified mobile terminal.

According to the aforementioned configuration, the vehicle information can be transmitted from the vehicle to the mobile terminal not through the mobile communication system (such as the fifth-generation mobile communication system) that uses the SIM and that requires high communication cost and high power consumption caused by the communication but through the LPWA communication that requires low communication cost and low power consumption. Thus, the vehicle information can be transmitted from the vehicle to the mobile terminal associated with the vehicle through the server while the communication cost and the power consumption are reduced. Further, the owner of the vehicle can grasp the situation of the vehicle through the vehicle information transmitted to the mobile terminal, and can provide the owner of the vehicle with rich user experience.

According to one or more aspects of the present disclosure, there is provided a vehicle communication system comprising: a plurality of vehicles; and a server that is communicably connected to at least one of the vehicles through an LPWA base station. When a first vehicle of the vehicles is present inside a communication area of the base station, the first vehicle transmits vehicle information relevant to the first vehicle and identification information of the first vehicle to the server through the base station. When the first vehicle is present outside the communication area of the base station and the first vehicle can communicate with a second vehicle of the vehicles, the first vehicle transmits the vehicle information and the identification information to the second vehicle. When the second vehicle is present inside the communication area, the second vehicle transmits the vehicle information and the identification information to the server through the base station. When the second vehicle is present outside the communication area and the second vehicle can communicate with a third vehicle of the vehicles, the second vehicle transmits the vehicle information and the identification information to the third vehicle. The server is configured to: receive the vehicle information and the identification information; identify a mobile terminal associated with the first vehicle based on the received identification information; and transmit the vehicle information to the identified mobile terminal.

According to the aforementioned configuration, the vehicle information is transmitted from the first vehicle to the server on the communication network not through the mobile communication system (such as the fourth-generation or fifth-generation mobile communication system) that uses the SIM and that requires high communication cost and high power consumption caused by the communication but through the LPWA communication that requires low communication cost and low power consumption. Then, the vehicle information is transmitted from the server to the mobile terminal associated with the first vehicle. Further, even when the first vehicle is not present inside the communication area of the LPWA base station, the vehicle information is transmitted to the server through the second vehicle or the third vehicle present inside the communication area of the LPWA base station. Then, the vehicle information is transmitted from the server to the mobile terminal. Thus, it is possible to provide the vehicle communication system that allows the vehicle to communicate with the server on the communication network while reducing communication cost and power consumption caused by the communication. Further, the owner of the first vehicle can grasp the situation of the first vehicle (such as the abnormality of the first vehicle) through the vehicle information transmitted to the mobile terminal. Therefore, rich user experience can be provided to the owner of the first vehicle.

The vehicle information may include maintenance information of the first vehicle.

According to the aforementioned configuration, the owner of the first vehicle can grasp a maintenance situation of the first vehicle by viewing the maintenance information of the first vehicle transmitted to the mobile terminal.

The vehicle information may include abnormality information indicating abnormality of the first vehicle.

According to the aforementioned configuration, the owner of the first vehicle can grasp the abnormality of the first vehicle by viewing the abnormality information of the first vehicle transmitted to the mobile terminal.

In response to detecting the abnormality of the first vehicle, the first vehicle may determine to transmit the abnormality information and the identification information to the server.

According to the aforementioned configuration, the abnormality information and the identification information of the first vehicle are transmitted to the mobile terminal when the abnormality of the first vehicle is detected. Thus, the owner of the first vehicle can immediately grasp the abnormality of the first vehicle through the mobile terminal.

The vehicle information may include position information of the first vehicle.

According to the aforementioned configuration, the owner of the first vehicle can grasp the current position of the first vehicle by viewing the position information of the first vehicle transmitted to the mobile terminal.

The vehicle information may include the position information of the first vehicle and abnormality information indicating abnormality of the first vehicle. In response to detecting the abnormality of the first vehicle, the first vehicle may determine to transmit the abnormality information, the position information and the identification information to the server.

According to the aforementioned configuration, when the abnormality of the first vehicle is detected, the abnormality information of the first vehicle and the position information of the first vehicle are transmitted to the mobile terminal. Thus, the owner of the first vehicle can immediately grasp the abnormality of the first vehicle and the current position of the first vehicle through the mobile terminal.

### BRIEF DESCRIPTION OF DRAWINGS

FIG. 1 is a schematic view showing an example of a vehicle communication system according to the present embodiment;
FIG. 2 is a block diagram showing an example of the configuration of a vehicle;
FIG. 3 is a flowchart for explaining a vehicle information transmission process executed by each vehicle;
FIG. 4 is a sequence diagram for explaining a first example of a series of processes executed by the vehicle communication system; and
FIG. 5 is a sequence diagram for explaining a second example of a series of processes executed by the vehicle communication system.

### DESCRIPTION OF EMBODIMENT

### (Configuration of Vehicle Communication System)

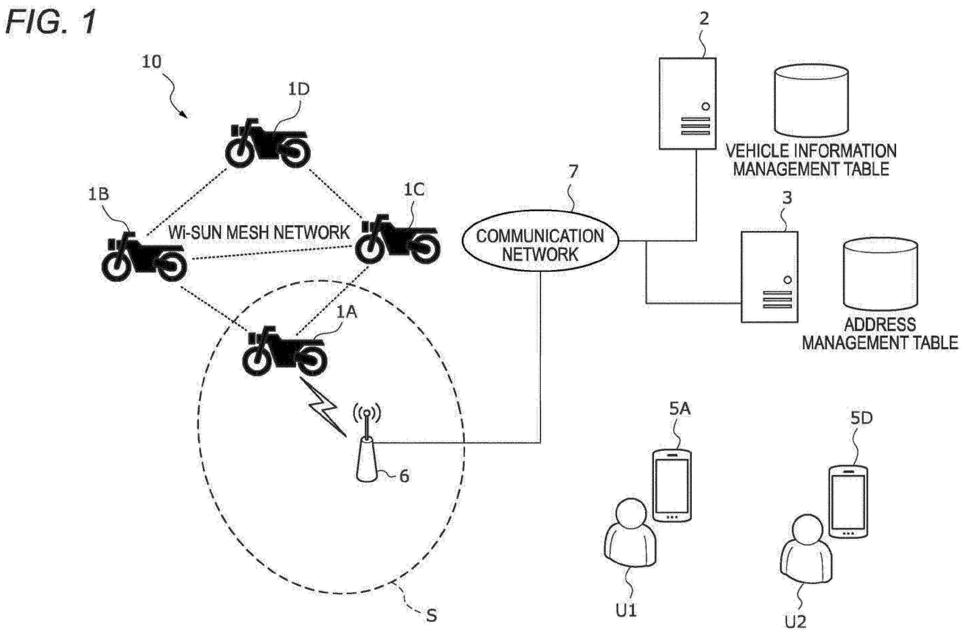

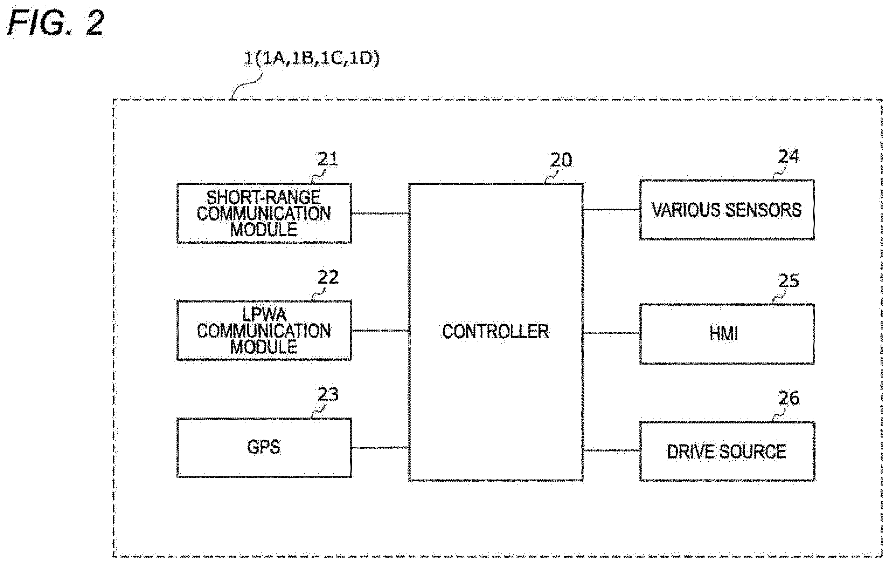

An embodiment of the present disclosure (hereinafter referred to as the present embodiment) will be described below with reference to the drawings. First, a vehicle communication system 10 according to the present embodiment will be described below with reference to FIG. 1 and FIG. 2. FIG. 1 is a schematic view showing an example of the vehicle communication system 10 according to the present embodiment. As shown in FIG. 1, the vehicle communication system 10 is provided with vehicles 1A to 1D, a management server 2, and a push notification server 3. Each of the vehicles 1A to 1D is a straddled vehicle. In particular, the vehicle 1A to 1D is a saddle-riding type motorcycle that can be turned by a rider tilting a vehicle body of the motorcycle. In the following description, each of the vehicles 1A to 1D may be generically referred to as vehicle 1. In the present embodiment, the vehicle 1 is not limited to a two-wheeled vehicle but may be a straddled three-wheeled vehicle or four-wheeled vehicle.

In the present embodiment, the vehicles 1A to 1D form a Wi-SUN (Wireless Smart Utility Network) mesh network. That is, the vehicles 1A to 1D are communicably connected to one another through the Wi-SUN mesh network. The Wi-SUN is a communication standard based on the international standard IEEE 802.15.4g. Moreover, the Wi-SUN is a wireless communication standard that uses radio waves in the 920 MHz band to enable to interconnect communication devices without using a base station. Further, the Wi-SUN may support multi-hop. In this case, the vehicle 1A is communicably connected to the vehicle 1D via the vehicle 1B or the vehicle 1C. The Wi-SUN communication is characterized in that it has a comparatively long communication distance (which is, for example, several hundred meters or more) as near field communication so as to secure high radio-wave reachability.

Further, in the case where the vehicle 1 is present inside a communication area S of an LPWA (Low Power Wide Area) base station 6, the vehicle 1 is communicably connected to a server on a communication network 7 through the base station 6.

The communication network 7 includes at least an IP (Internet Protocol) network such as the Internet. The LPWA has recently drawn attention as a communication method for a global loT (Internet of Things) network, which is characterized by low cost, low power consumption, and long-distance transmission. The LPWA communication method is roughly classified into two types: a communication method that uses an unlicensed band and a communication method that uses a licensed band. Examples of typical LPWA communication standards include SIGFOX (registered trademark), LoRaWAN and NB-loT. The SIGFOX and the LoRaWAN are communication methods that use an unlicensed band, while the NB-loT is a communication method that uses a licensed band. In the present embodiment, for example, the SIGFOX may be used as an LPWA communication standard. In this case, the communication area S of the LPWA base station 6 can cover a range of several tens of kilometers ahead of the base station 6.

The management server 2 is placed on the communication network 7. The management server 2 is configured to receive vehicle information of the vehicle 1 and identification information of the vehicle 1 from the vehicle 1 via the LPWA base station 6 and the communication network 7. The vehicle information of the vehicle 1 includes, for example, at least one of maintenance information of the vehicle 1, abnormality information indicating abnormality of the vehicle 1, and position information of the vehicle 1. The identification information of the vehicle 1 is unique information assigned to the vehicle 1 to identify the vehicle 1.

Further, the management server 2 is configured to identify a mobile terminal associated with the vehicle 1 based on the identification information of the vehicle 1. A vehicle information management table in which information about mobile terminals (such as device tokens of the mobile terminals) and identification information of vehicles are associated with each other is stored in a storage device of the management server 2. The mobile terminal is a communication device carried by an owner of the vehicle 1. The mobile terminal is typically a smartphone, a mobile phone or a tablet. Further, the mobile terminal may be a wearable device worn by the owner, such as a smartwatch or AR glasses.

The push notification server 3 is placed on the communication network 7. The push notification server 3 is configured to transmit the vehicle information of the vehicle 1 to a predetermined mobile terminal after receiving a device token of the predetermined mobile terminal and the vehicle information of the vehicle 1 from the management server 2 through the communication network 7. An address management table in which the device tokens of the mobile terminals and network addresses (such as IP addresses) of the mobile terminals are associated with each other is stored in a storage device of the push notification server 3.

In the present embodiment, it is assumed that an owner U1 (rider) of the vehicle 1A carries a mobile terminal 5A. That is, it is assumed that the vehicle 1A and the mobile terminal 5A are associated with each other on the vehicle information management table stored in the management server 2. Further, it is assumed that an owner U2 (rider) of the vehicle 1D carries a mobile terminal 5D. That is, it is assumed that the vehicle 1D and the mobile terminal 5D are associated with each other on the vehicle information management table. The mobile terminals 5A and 5D are communicably connected to the management server 2 and the push notification server 3 through the communication network 7.

### (Configuration of Vehicle)

Next, the configuration of each of the vehicles 1A to 1D will be described below with reference to FIG. 2. It is assumed that the vehicles 1A to 1D have the same configuration. Therefore, the vehicle 1A to 1D will be hereinafter simply referred to as vehicle 1 for convenience of explanation. The vehicle 1 includes a controller 20, a short-range communication module 21, an LPWA communication module 22, and a GPS (Global Positioning System) 23. The vehicle 1 further includes various sensors 24, an HMI (Human Machine Interface) 25, and a drive source 26.

The controller 20 is configured to control the constituent components provided in the vehicle 1. The control unit 20 is, for example, constituted by at least one electronic control unit (ECU). The ECU may include a computer system including at least one processor and at least one memory, and an electronic circuit constituted by active elements and passive elements.

The controller 20 may be constituted by ECUs. In this case, the ECUs constituting the controller 20 may be physically separated from one another. In this respect, when, for example, a communication control ECU for controlling the communication modules, a traveling control ECU for controlling traveling of the vehicle, and a display control ECU for controlling a display system that is a part of the HMI 25 are mounted on the vehicle 1, the control unit 20 includes the communication control ECU, the traveling control ECU, and the display control ECU.

The short-range communication module 21 is a short-range communication module based on the Wi-SUN communication standard. The short-range communication module 21 is configured to communicably connect the vehicle 1 to another vehicle through short-range communication based on the Wi-SUN communication standard. The short-range communication module 21 is provided with a transmission/reception antenna, a radio frequency (RF) circuit, and a signal processing circuit.

The LPWA communication module 22 is a long-range communication module based on the LPWA communication standard. The LPWA communication module 22 is configured to connect the vehicle 1 to the server on the communication network 7 through LPWA communication that requires low communication cost and low power consumption. In particular, the LPWA communication module 22 is configured to communicably connect the vehicle 1 to the server on the communication network 7 through the LPWA base station 6 and a not-shown core network. The LPWA communication module 22 is provided with an antenna, an RF circuit, and a signal processing circuit.

The GPS 23 is configured to acquire position information indicating the position of the vehicle 1. The various sensors 24 may include, for example, a vehicle speed sensor for detecting speed of the vehicle 1, an acceleration sensor for detecting acceleration of the vehicle 1 in three directions of XYZ axes, and an inclination angle sensor for detecting inclination of the vehicle 1 in a left-right direction with respect to the ground. Moreover, the various sensors 24 may further include a drive source rotation speed sensor, a cooling water temperature sensor, and a fuel gauge sensor.

The vehicle 1 may not include the GPS 23. In this case, the vehicle 1 may acquire the position information of the vehicle 1 through communication with the base station 6. Further, the vehicle 1 may acquire the position information of the vehicle 1 through communication with an access point of Wi-Fi (registered trademark). In this case, the Wi-Fi communication module may be mounted on the LPWA communication module 22. It should be noted that accuracy of the position information of the vehicle 1 acquired through the base station 6 or the access point is not higher than accuracy of the position information of the vehicle 1 acquired from the GPS 23. Specifically, the position information of the vehicle 1 acquired through the base station 6 has an error of about several hundred meters with respect to actual position information of the vehicle 1. On the other hand, the position information of the vehicle 1 acquired through the access point has an error of about several meters to several tens of meters with respect to the actual position information of the vehicle 1.

The HMI 25 functioning as an input/output interface between the rider and the vehicle 1 is constituted by an input portion for accepting an input operation from the rider and an output unit for outputting information from the vehicle 1. The input portion of the HMI 25 includes, for example, a throttle grip, a brake lever, a handle switch, and a main switch. The output portion of the HMI 25 includes, for example, a meter unit constituted by a speedometer and a tachometer, and the display system for displaying infotainment information. The drive source 26 that is configured to generate driving force of the vehicle 1 is an engine and/or a motor.

### (Vehicle Information Transmission Process)

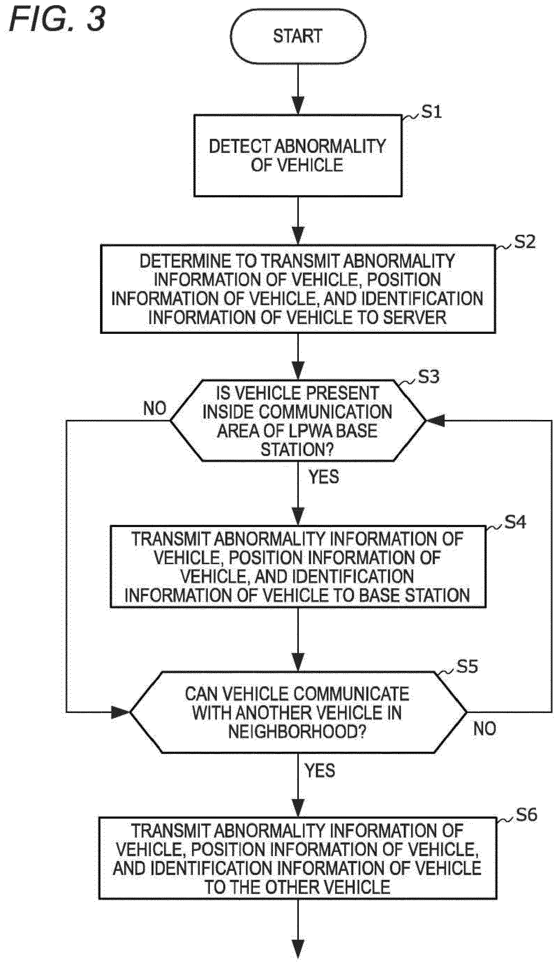

Next, a vehicle information transmission process executed by each of the vehicles 1A to 1D will be described below with reference to FIG. 1 and FIG. 3. FIG. 3 is a flowchart for explaining the vehicle information transmission process executed by the vehicle 1A to 1D (hereinafter simply referred to as vehicle 1). In this example, it is assumed that abnormality information of the vehicle 1 and position information of the vehicle 1 are transmitted as an example of the vehicle information from the vehicle 1 to the management server 2.

In a step S1, as shown in FIG. 3, the controller 20 (see FIG. 2) detects abnormality of the vehicle 1 based on detection signals outputted from the various sensors 24 or the position information of the vehicle 1. For example, the controller 20 detects abnormality of the vehicle 1 when detecting vibration or inclination of the vehicle 1 based on a detection signal outputted from the acceleration sensor or the inclination angle sensor in a state in which the vehicle 1 has been set to an anti-theft mode. Further, the controller 20 detects abnormality of the vehicle 1 when detecting a significant change in the position of the vehicle 1 based on the position information of the vehicle 1 outputted from the GPS 23 in the state in which the vehicle 1 has been set to the anti-theft mode. Specifically, the controller 20 may detect abnormality of the vehicle 1 when the current position of the vehicle 1 has significantly changed from the position where the vehicle 1 was set to the anti-theft mode.

Next, in a step S2, the controller 20 determines to transmit the abnormality information indicating the abnormality of the vehicle 1, the position information of the vehicle 1 and identification information of the vehicle 1 to the management server 2 on the network 7 in response to the detection of the abnormality of the vehicle 1. Then, the controller 20 determines whether the vehicle 1 is present inside the communication area S of the LPWA base station 6 or not (step S3). When determining that the vehicle 1 is present inside the communication area S (YES in the step S3), the controller 20 transmits the abnormality information of the vehicle 1, the position information of the vehicle 1, and the identification information of the vehicle 1 to the base station 6 through the LPWA communication module 22 (step S4). Then, these pieces of information are transmitted to the management server 2 through the base station 6 and the communication network 7.

On the other hand, when determining that the vehicle 1 is present outside the communication area S (NO in the step S3), the controller 20 determines whether the vehicle 1 can communicate with another vehicle in the surroundings or not (step S5). More specifically, in the step S5, the controller 20 determines whether or not the vehicle 1 can communicate with the other vehicle in the surroundings through short-range communication based on the Wi-SUN communication standard.

When determining that the vehicle 1 can communicate with the other vehicle in the surroundings through the short-range communication based on the Wi-SUN communication standard (YES in the step S5), the controller 20 transmits the abnormality information of the vehicle 1, the position information of the vehicle 1 and the identification information of the vehicle 1 to the other vehicle through the short-range communication module 21 (step S6). In particular, the controller 20 may broadcast these pieces of information toward the other vehicle in the surroundings. On the other hand, when the determination result of the step S5 is NO, the controller 20 executes the determination processing of the step 3 again.

Thus, in the present embodiment, when the abnormality of the vehicle 1 is detected, the abnormality information of the vehicle 1, the position information of the vehicle 1, the identification information of the vehicle 1 are transmitted to the management server 2. When the vehicle 1 is present inside the communication area S of the base station 6, these pieces of information are transmitted to the management server 2 on the communication network 7 through the base station 6. On the other hand, when the vehicle 1 is present outside the communication area S of the base station 6, these pieces of information are broadcast to the other vehicle constituting the Wi-SUN mesh network.

### (Example where Vehicle Information of Vehicle 1A is transmitted to Mobile Terminal 5A)

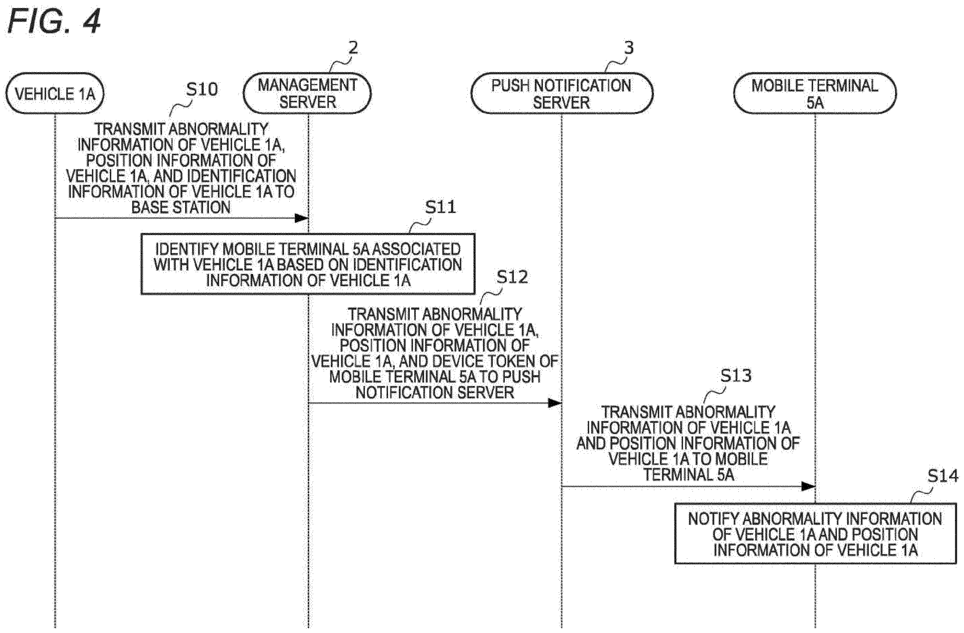

Next, an example in which vehicle information of the vehicle 1A is transmitted to the mobile terminal 5A will be described below with reference to FIG. 1 and FIG. 4. FIG. 4 is a sequence diagram for explaining a first example of a series of processes executed by the vehicle communication system 10. In particular, in this example, it is assumed that abnormality information of the vehicle 1A and position information of the vehicle 1A are transmitted as an example of the vehicle information of the vehicle 1A to the mobile terminal 5A.

Since the vehicle 1A is present inside the communication area S of the base station 6, the controller 20 of the vehicle 1A executes the processing of the step S4 after going through the processings of the steps S1 to S3 shown in FIG.3. Thus, the vehicle 1A transmits the abnormality information of the vehicle 1A, the position information of the vehicle 1A, and the identification information of the vehicle 1A to the base station 6. Since these pieces of information are transmitted to the management server 2, it is assumed that information indicating a network address of the management server 2 is added to these pieces of information. Then, after receiving the abnormality information of the vehicle 1A, the position information of the vehicle 1A, and the identification information of the vehicle 1A, the management server 2 placed on the communication network 7 identifies the mobile terminal 5A associated with the vehicle 1A based on the identification information of the vehicle 1A (step S11).

Specifically, the management server 2 refers to the vehicle information management table to identify the mobile terminal 5A associated with the vehicle 1A from the identification information of the vehicle 1A. In this case, the management server 2 refers to the vehicle information management table to identify a device token of the mobile terminal 5A. Next, the management server 2 transmits the abnormality information of the vehicle 1A, the position information of the vehicle 1A, and the device token of the mobile terminal 5A to the push notification server 3 (step S12).

After receiving the abnormality information of the vehicle 1A, the position information of the vehicle 1A, and the device token of the mobile terminal 5A, the push notification server 3 refers to the address management table to identify a network address (for example, an IP address) of the mobile terminal 5A from the device token of the mobile terminal 5A. Then, the push notification server 3 transmits the abnormality information of the vehicle 1A and the position information of the vehicle 1A to the mobile terminal 5A through the communication network 7 (step S13).

After receiving the abnormality information of the vehicle 1A and the position information of the vehicle 1A through the communication network 7 and the base station (not shown) for the mobile communication system, the mobile terminal 5A visibly and/or audibly notifies of the pieces of information (step S14). Thus, the owner U1 of the vehicle 1A carrying the mobile terminal 5A can immediately grasp the abnormality of the vehicle 1A and the current position of the vehicle 1A through the mobile terminal 5A. In particular, the owner U1 can grasp the abnormality of the vehicle 1A by viewing the abnormality information of the vehicle 1A displayed on the mobile terminal 5A. At the same time, the owner U1 can grasp the current position of the vehicle 1A by viewing the position information of the vehicle 1A displayed on the mobile terminal 5A. Further, when the abnormality of the vehicle 1A is detected, the abnormality information of the vehicle 1A and the position information of the vehicle 1A are transmitted to the mobile terminal 5A. Therefore, the owner U1 can grasp the abnormality of the vehicle 1A and the current position of the vehicle 1A in real time through the mobile terminal 5A.

According to the present embodiment, the abnormality information, the position information and the identification information of the vehicle 1A are transmitted from the vehicle 1A to the management server 2 on the communication network 7 not through a mobile communication system (such as a fifth-generation mobile communication system) that uses an SIM and that requires high communication cost and high power consumption but through the LPWA communication that requires low communication cost and low power consumption. Then, the abnormality information and the position information of the vehicle 1A are transmitted from the management server 2 to the mobile terminal 5A associated with the vehicle 1A via the push notification server 3. In this manner, the abnormality information and the position information of the vehicle 1A can be transmitted to the mobile terminal 5A at low communication cost and low power consumption, and the owner U1 of the vehicle 1A can grasp the situation of the vehicle 1A by viewing the abnormality information and the position information transmitted to the mobile terminal 5A. Thus, it is possible to provide the vehicle communication system 10 capable of providing the owner U1 of the vehicle 1A with rich user experience.

### (Example where Vehicle Information of Vehicle 1D is Transmitted to Mobile Terminal 5D)

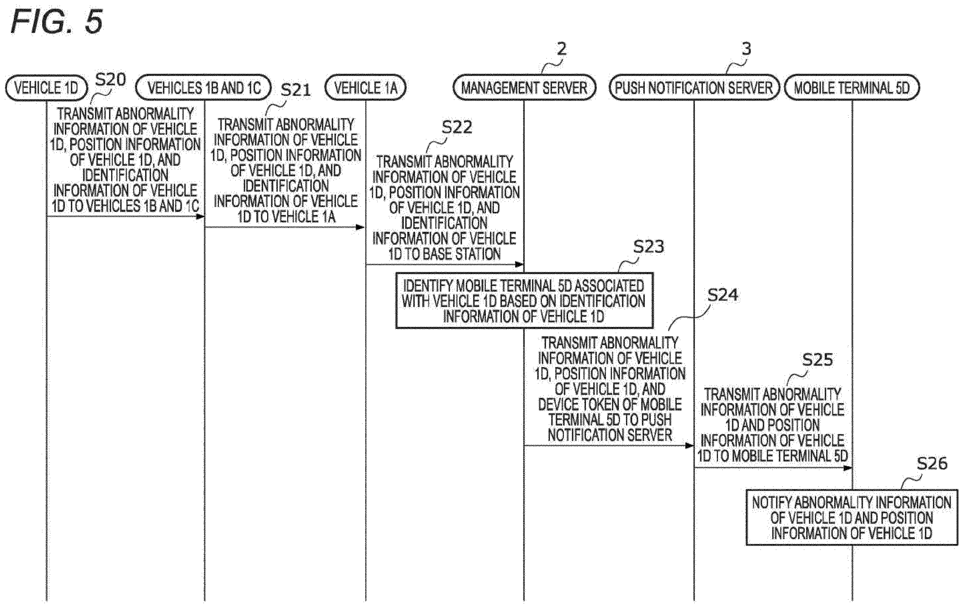

Next, an example in which vehicle information of the vehicle 1D is transmitted to the mobile terminal 5D will be described below with reference to FIG. 1 and FIG. 5. FIG. 5 is a sequence diagram for explaining a second example of a series of processes executed by the vehicle communication system 10. In this example, it is assumed that abnormality information of the vehicle 1D and position information of the vehicle 1D are transmitted as an example of the vehicle information of the vehicle 1D to the mobile terminal 5D.

Since the vehicle 1D (an example of a first vehicle) is present outside the communication area S of the base station 6, the controller 20 of the vehicle 1D executes the processing of the step S6 after going through the processings of the steps S1, S2, S3, and S5 shown in FIG. 3. In a step S20, as shown in FIG. 5, the controller 20 of the vehicle 1D broadcasts the abnormality information of the vehicle 1 D, the position information of the vehicle 1D, and the identification information of the vehicle 1D to the vehicles 1B and 1C (an example of a second vehicle) constituting the Wi-SUN mesh network. Thus, when the vehicle 1D is present outside the communication area S of the base station 6 and the vehicle 1D can communicate with the vehicle 1B and the vehicle 1C, the vehicle 1D transmits the abnormality information, the position information, and the identification information of the vehicle 1D to the vehicle 1B and the vehicle 1C.

In this example, it is assumed that the vehicle 1D and the vehicle 1A are not directly connected to each other through the Wi-SUN mesh network. In addition, it is assumed that the Wi-SUN supports the multi-hop. Further, since the abnormality information, the position information, and the identification information of the vehicle 1D are to be finally transmitted to the management server 2, it is assumed that information indicating the network address of the management server 2 is added to these pieces of information.

Next, after receiving the abnormality information, the position information, and the identification information of the vehicle 1D, the vehicle 1B determines whether the vehicle 1B is present inside the communication area S of the base station 6 or not. In this example, since the vehicle 1B is present outside the communication area S of the base station 6, the vehicle 1B transmits the abnormality information, the position information, and the identification of the vehicle 1D to the vehicle 1A (an example of a third vehicle) constituting the Wi-SUN mesh network (step S21). The vehicle 1C also executes the same process as the vehicle 1B. Thus, when the vehicle 1B and the vehicle 1C are present outside the communication area S of the base station 6 and the vehicle 1B and the vehicle 1C can communicate with the vehicle 1A, the vehicle 1B and the vehicle 1C transmit the abnormality information, the position information, and the identification information of the vehicle 1D to the vehicle 1A.

Next, since the vehicle 1A is present inside the communication area S of the base station 6, the vehicle 1A transmits the abnormality information, the position information, and the identification information of the vehicle 1D to the base station 6 (step S22). Thus, even when the vehicle 1D is not present inside the communication area S of the base station 6 (in other words, even when the vehicle 1D cannot transmit the abnormality information, the position information, and the identification information of the vehicle 1D to the management server 2 through the LPWA communication), the abnormality information, the position information, and the identification information of the vehicle 1D are transmitted to the vehicle 1A through the Wi-SUN mesh network. Then, these pieces of information are transmitted to the management server 2 on the communication network 7 through the base station 6.

Then, after receiving the abnormality information, the position information, and the identification information of the vehicle 1D, the management server 2 placed on the communications network 7 refers to the vehicle information management table to identify the mobile terminal 5D associated with the vehicle 1D based on the identification information of the vehicle 1D (step S23). In this case, the management server 2 refers to the vehicle information management table to identify a device token of the mobile terminal 5D. Next, the management server 2 transmits the abnormality information of the vehicle 1D, the position information of the vehicle 1D, and the device token of the mobile terminal 5D to the push notification server 3 (step S24).

After receiving the abnormality information of the vehicle 1D, the position information of the vehicle 1D, and the device token of the mobile terminal 5D, the push notification server 3 refers to the address management table to identify a network address of the mobile terminal 5D from the device token of the mobile terminal 5D. Then, the push notification server 3 transmits the abnormality information of the vehicle 1D and the position information of the vehicle 1D to the mobile terminal 5D through the communication network 7 (step S25).

After receiving the abnormality information of the vehicle 1D and the position information of the vehicle 1D through the communication network 7 and the base station for the mobile communication system, the mobile terminal 5D visibly and/or audibly receives the pieces of information (step S26). Thus, the owner U2 of the vehicle 1D carrying the mobile terminal 5D can immediately grasp the abnormality of the vehicle 1D and the current position of the vehicle 1D through the mobile terminal 5D.

According to the present embodiment, the abnormal information, the position information, and the identification information of the vehicle 1D are transmitted from the vehicle 1D to the management server 2 on the communication network 7 not through a mobile communication system that uses an SIM and that requires high communication cost and high power consumption but through the LPWA communication that requires low communication cost and lower power consumption. In particular, even when the vehicle 1D is not present inside the communication area S of the base station 6, the abnormality information, the position information, and the identification information of the vehicle 1D are transmitted from the vehicle 1D to the vehicle 1A present inside the communication area S of the base station 6 via the Wi-SUN mesh network. Then, these pieces of information are transmitted from the vehicle 1A to the management server 2 on the communication network through the base station 6. Further, the abnormality information and the position information of the vehicle 1D are transmitted from the management server 2 to the mobile terminal 5D associated with the vehicle 1D via the push notification server 3. In this manner, the abnormality information and the position information of the vehicle 1D can be transmitted to the mobile terminal 5D at low communication cost and low power consumption, and the owner U2 of the vehicle 1D can grasp the situation of the vehicle 1D by viewing the abnormality information and the position information transmitted to the mobile terminal 5D. Thus, it is possible to provide the vehicle communication system 10 capable of providing the owner U2 of the vehicle 1D rich user experience.

Further, according to the present embodiment, the short-range communication module 21 of the vehicle 1 is a short-range communication module based on the Wi-SUN communication standard. Therefore, even when the vehicles 1A to 1D are distant from one another, the mesh network can be constructed by short-range communication among the vehicles 1A to 1D. Further, when the Wi-SUN supports the multi-hop, it is possible to expand the area of the mesh network constructed by the vehicles 1A to 1D. For example, the vehicle 1D can be communicably connected to the vehicle 1A through the vehicle 1B or the vehicle 1C. Thus, even when the predetermined vehicle is not provided inside the communication area S of the base station 6, the vehicle information can be transmitted to the management server 2 through the Wi-SUN mesh network and the LPWA communication. That is, it is possible to supplement the communication area of the LPWA by the Wi-SUN mesh network among the vehicles.

In the present embodiment, the abnormality information and the position information of the vehicle 1 are transmitted as an example of the vehicle information to the management server 2. However, the vehicle information is not limited to the abnormality information and the position information. For example, the vehicle information may be maintenance information of the vehicle 1. In this respect, the maintenance information of the vehicle 1 may include information indicating the degree of consumption of each of the components of the vehicle 1. For example, information indicating the degree of consumption of a battery of the vehicle 1 may be transmitted as an example of the maintenance information of the vehicle 1 to the management server 2.

Further, in the present embodiment, the Wi-SUN mesh network is constructed by the vehicles. However, the short-range communication standard for interconnecting the vehicles is not limited to the Wi-SUN. For example, the short-range communication standard for interconnecting the vehicles may be Wi-Fi (registered trademark) or Bluetooth (registered trademark).

Further, in the present embodiment, the vehicle information of the vehicle 1 is transmitted from the management server 2 to the mobile terminal through the push notification server 3. However, the present embodiment is not limited thereto. For example, the push notification server 3 may be not provided in the vehicle communication system 10. In this case, the network addresses of the mobile terminals may be included in the vehicle information management table. Further, the network addresses of the mobile terminals and the identification information of the vehicles may be associated with each other. Further, the information included in the vehicle information management table may be updated whenever the network address of any one of the mobile terminals is changed. For example, after referring to the vehicle information management table to identify the network address of the mobile terminal associated with the identification information of the vehicle 1, the management server 2 may transmit the vehicle information of the vehicle 1 to the mobile terminal.

Further, when the push notification server 3 is not provided in the vehicle communication system 10, contact information (such as e-mail addresses or SNS service user IDs) of the owners of the vehicles may be included in the vehicle information management table. Further, the contact information of the owners of the vehicles and the identification information of the vehicles may be associated with each other. For example, after referring to the vehicle information management table to identify the contact information of the owner of the vehicle 1 associated with the identification information of the vehicle 1, the management server 2 may transmit the vehicle information of the vehicle 1 to the identified contact information. Specifically, when the contact information of the owner of the vehicle 1 is the email address of the owner, the management server 2 may transmit the vehicle information of the vehicle 1 to an incoming mail server that manages the email address of the owner of the vehicle 1. Then, the vehicle information of the vehicle 1 is transmitted from the incoming mail server to the mobile terminal.

Thus, after identifying the mobile terminal associated with the vehicle 1 based on the identification information of the vehicle 1, the management server 2 can directly or indirectly transmit the vehicle information of the vehicle 1 to the mobile terminal.

## Claims

1. A straddled vehicle (1), comprising:
a short-range communication module (21) configured to communicably connect the vehicle (1) to at least one other vehicle; and
an LPWA communication module (22) configured to communicably connect the vehicle (1) to an LPWA base station (6) of a communication network (7) connected to a server (2);
wherein:
the LPWA communication module (22) of the vehicle (1) is configured to transmit vehicle information relevant for the vehicle (1) and identification information of the vehicle (1) to the server (2) through the base station (6), when the vehicle (1) is present inside a communication area (S) of the base station (6);
the short-range communication module (21) of the vehicle (1) is configured to transmit the vehicle information and the identification information to the other vehicle, when the vehicle (1) is present outside the communication area (S) of the base station (6) and the vehicle (1) can communicate with the other vehicle

2. The vehicle (1) according to Claim 1, wherein
the vehicle information includes maintenance information of the vehicle (1), and/or the vehicle information includes abnormality information indicating abnormality of the vehicle (1).

3. The vehicle (1) according to Claim 2, wherein
the vehicle (1) is configured to determine to transmit the abnormality information and the identification information to the server (2), in response to detecting the abnormality of the vehicle (1).

4. The vehicle (1) according any one of Claims 1 to 3, wherein
the vehicle information includes position information of the vehicle (1).

5. The vehicle (1) according to Claim 4, wherein
the vehicle information includes the position information of the vehicle (1) and abnormality information indicating abnormality of the vehicle (1); and
the vehicle (1) is configured to determine to transmit the abnormality information, the position information and the identification information to the server (2), in response to detecting the abnormality of the vehicle (1).

6. The vehicle (1) according to any one of Claims 1 to 5, wherein
the short-range communication module (21) is a short-range communication module based on a Wi-SUN communication standard.

7. A vehicle communication system (10) comprising:
a plurality of vehicles (1A to 1D), preferably according to at least one of the claims 1 to 6; and
a server (2) that is communicably connectable to plurality of vehicles (1A to 1D) through an LPWA base station (6);
wherein:
a first vehicle is configured to transmit vehicle information relevant to the first vehicle and identification information of the first vehicle to the server (2) through the base station (6), when the first vehicle of the plurality of vehicles (1A to 1D) is present inside a communication area (S) of the base station (6);
the first vehicle is configured to transmit the vehicle information and the identification information to the second vehicle, when the first vehicle is present outside the communication area (S) of the base station (6) and the first vehicle can communicate with the second vehicle of the plurality of vehicles (1A to 1D);
a second vehicle is configured to transmit the vehicle information and the identification information to the server (2) through the base station (6), when the second vehicle is present inside the communication area (S), and
the second vehicle is configured to transmit the vehicle information and the identification information to a third vehicle, when the second vehicle is present outside the communication area (S) and the second vehicle can communicate with the third vehicle of the plurality of vehicles (1A to 1D).

8. The vehicle communication system (10) according to Claim 7, wherein
the server (2) is configured to:
receive the vehicle information and the identification information;
identify a mobile terminal (5A, 5B) associated with at least one of the plurality of vehicles (1A to 1D) based on the received identification information; and
transmit the vehicle information to the identified mobile terminal (5A, 5B).

9. The vehicle communication system (10) according to Claim 7 or 8, wherein
the vehicle information includes maintenance information of the first vehicle, and/or abnormality information indicating abnormality of the first vehicle.

10. The vehicle communication system (10) according to Claim 9, wherein
at least one of the a plurality of vehicles (1A to 1D) is configured to determine to transmit the abnormality information and the identification information to the server (2), in response to detecting the abnormality of the vehicle (1).

11. The vehicle communication system (10) according to any one of Claims 7 to 10, wherein the vehicle information includes position information of the first vehicle.

12. The vehicle communication system (10) according to Claim 11, wherein
the vehicle information includes the position information of the first vehicle and abnormality information indicating abnormality of the first vehicle; and
the first vehicle is configured to determine to transmit the abnormality information, the position information and the identification information to the server (2), in response to detecting the abnormality of the first vehicle.

13. The vehicle communication system (10) according to any one of Claims 7 to 12, wherein the plurality of vehicles (1A to 1D) are straddled vehicles.
